Europäisches Patentamt

European Patent Office

Office européen des brevets

(19)

(11) Publication number : **0 538 005 A2**

(12) # EUROPEAN PATENT APPLICATION

(21) Application number : **92309359.5**

(22) Date of filing : **14.10.92**

(51) Int. Cl.⁵ : **G06F 7/60**

(30) Priority : **16.10.91 US 777589**

(43) Date of publication of application :
**21.04.93 Bulletin 93/16**

(84) Designated Contracting States :
**DE FR GB**

(71) Applicant : **INTEGRATED SYSTEMS, INC.**
**3620 Jay Street**
**Santa Clara, California 95054-3309 (US)**

(72) Inventor : **Gaither, Shawn A.**
**18887 McFarland Avenue**
**Saragota, California 95070 (US)**

(74) Representative : **Jackson, David Spence et al**
**REDDIE & GROSE 16, Theobalds Road**
**London, WC1X 8PL (GB)**

(54) **Real time control system and method with fuzzy logic subsystem.**

(57)    A multirate real-time control system 102 is represented as a set of interconnected functional blocks. Subsets of the functional blocks are defined as subsystems of the multirate real-time system 102, with at least one of the subsystems including a fuzzy logic functional block 150, called a fuzzy logic subsystem. A double buffer 120 interface includes an output buffer 125,126 and a sample and hold buffer 128. The output signal buffer 125, 126 holds output signal values generated by the functional blocks. Prior to executing the computations associated with each subsystem, all input signal values to be used by the subsystem's computations are copied into the sample and hold buffer 128. The input signal values copied into the sample and hold buffer 128 are held invariant during execution of the subsystem's computations, whereby a consistent set of input signal values is presented to each subsystem, including the fuzzy logic subsystem 150. Each fuzzy logic subsystem 150 has a set of membership curves 162, a fuzzifier module 152 for converting crisp input signal values into fuzzy logic values, a connective logic module 154 for combining fuzzy logic values in accordance with defined rules to produced one or more output fuzzy values, an implication operator module 156 for applying each output fuzzy value to a corresponding membership curve to produce an implicated assertion curve, a defuzzifier module 158 for computer a crisp output value as a function of each implicated assertion curve, and an aggregation module 160 for combining two or more crisp output values.

FIGURE 6

EP 0 538 005 A2

The subject matter of this application relates to that set forth in U.S. Patent 4,796, 179, which is incorporated herein by reference.

The present invention relates generally to the use of fuzzy logic in control systems, and particularly to multirate control systems incorporating fuzzy logic in one or more subsystems.

## BACKGROUND OF THE INVENTION

Fuzzy logic controllers and systems are tools used to provide qualitative information stored in the form of rules. For example, in order for an aircraft to maintain straight and level flight, a common rule of thumb might state that if airspeed is fast and altitude is high then throttle (or thrust) must be great. Both the conditions and the assertion are qualitative in nature.

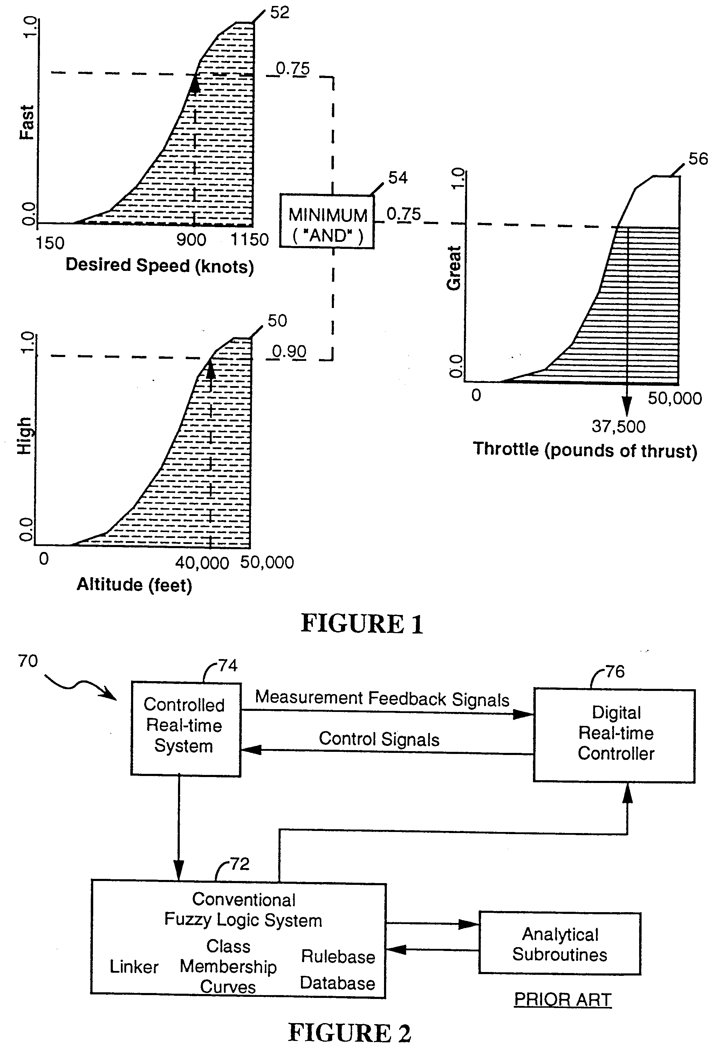

The qualitative nature of fuzzy logic is implemented using membership curves which are used to convert "crisp" measurement values into "fuzzy" membership values, which are then combined in accordance with a specified set of rules. Referring to Figure 1, in the aircraft example, two membership curves 50 and 52 are used to convert altitude and desired airspeed into fuzzy membership values for "high" and "fast". These fuzzy values are combined using a connective logic rule 54 to produce a "conditional value" 0.75, and the resulting conditional value (corresponding to "thrust is great") is then converted back into a "crisp" engine thrust value using a third membership curve 56 called an assertion curve. In this example, the fuzzy conditional value 0.75 is converted to a thrust value by computing the centroid of minimum of the assertion curve 56 and the conditional value 0.75.

Clearly, this is only a simple example of a fuzzy logic controller, using just two input paramaters and one rule. In more complicated control systems using fuzzy logic techniques, dozens or even hundreds of input parameters may be used in conjunction with similar numbers of rules.

Referring to Figure 2, in a conventional real time control system 70 using fuzzy logic, the fuzzy logic system 72 is used as a separate module which receives measurement values from the system being controlled 74 and which delivers "decisions" to a real time controller 76. Thus, the fuzzy logic system 72 is typically treated as a distinct entity that helps make certain control decisions. In this conventional type of system, reliability of the control system may be compromised because the fuzzy logic system 74 is not subject to the same timing, computation and input/output control mechanisms as the real time controller 76.

Another aspect of fuzzy logic controllers is that while the basic technique is the one shown in Figure 1, there are many different implementations which vary in terms of how multiple input parameter conversion rules are combined, how assertion curves are converted into crisp output values, how multiple parallel assertions are converted into a single crisp output value,,and so on. While many of these techniques are known in the art, there has not been any simple way for the programmer of a particular control system to try out these various techniques, and/or to try different combinations thereof, without long and laborious programming effort. The present invention overcomes this problem by modularizing the fuzzy logic process into five distinct steps or modules, and providing a library of alternate routines for each such module which represent most of the known fuzzy logic computational techniques. To select any particular fuzzy logic computational technique, the user or programmer simple selects a "mode" of operation for each of the five fuzzy logic modules.

Yet another aspect of using fuzzy logic in conjunction with a multirate real time controller is the need to coordinate the flow of input and output signals from the fuzzy logic with those of other parts of the real time controller. For instance, if the fuzzy logic is a treated as totally separate software module, it is possible that two related inputs to the fuzzy logic module might be generated at times t-a and t+a. If the fuzzy logic module reads the two inputs at time t, it has received inconsistent inputs. Another example would be a control system having synchronized signals which are received by the fuzzy logic module as inputs, but are actually read in at times t-a and t+a, so that an inconsistency results. There is nothing in the prior art system of Figure 2 which prevents the fuzzy logic system 72 from receiving inconsistent input signals.

The present invention, on the other hand, provides two mechanisms for ensuring acquisition of consistent data. First, input signals to each subsystem are buffered so that input signal values to the subsystem cannot change after each execution of the subsystem begins. Second, the present invention schedules execution of at least some subsystems based on the time that their outputs are needed, which ensures that events happen in the proper order. For instance, input data acquisition tasks can be scheduled to ensure that such tasks are all completed prior to starting execution of the subsystems using those inputs.

## SUMMARY OF THE INVENTION

In summary, the present invention is a method of either simulating or operating a multirate real-time control system having at least one embedded fuzzy logic system. The multirate real-time control system is represented as a set of interconnected functional blocks, including data specifying computations to be performed each time the functional blocks are executed. Subsets of the functional blocks are defined as subsystems of the multirate real-time system, with at least one of the subsystems (herein called a fuzzy logic subsystem) including a fuzzy logic functional block.

A double buffer interface stores input and output signal values associated with the functional blocks. It has an output signal buffer for holding output signal values generated by the functional blocks during execution thereof, and a sample and hold buffer for each subsystem. Prior to executing the computations associated with each defined subsystem, all input signal values to be used by those computations are copied into the sample and hold buffer associated with the subsystem. The input signal values copied into the sample and hold buffer are held invariant during execution of the subsystem's computations, whereby a consistent set of input signal values is presented to each subsystem including the fuzzy logic subsystem.

Each fuzzy logic subsystem has a set of membership curves, a fuzzifier module for converting crisp input signal values into fuzzy logic values, a connective logic module for combining fuzzy logic values in accordance with defined rules to produce one or more output fuzzy values, an implication operator module for applying each output fuzzy value to a corresponding membership curve to produce an implicated assertion curve, a defuzzifier module for computing a crisp output value as a function of each implicated assertion curve, and an aggregation module for combining two or more crisp output values.

## BRIEF DESCRIPTION OF THE DRAWINGS

Additional objects and features of the invention will be more readily apparent from the following detailed description and appended claims when taken in conjunction with the drawings, in which:

Figure 1 shows a set of membership curves for computing an airplane's required thrust using fuzzy logic.

Figure 2 is a block diagram of a prior art real time control system with a fuzzy logic subsystem.

Figure 3 is a block diagram of a multirate real time control system with one or more fuzzy logic subsystems in accordance with the present invention.

Figure 4 depicts a tree data structure representing the functional blocks of a multirate real time control system.

Figure 5 depicts a double buffer software interface.

Figure 6 is a block diagram of a fuzzy logic subsystem.

Figures 7 and 8A-8D are flow charts of the computational process associated with a fuzzy logic subsystem.

Figures 9A-9E are flow charts associated with the five modules in a fuzzy logic subsystem.

## DESCRIPTION OF THE PREFERRED EMBODIMENT

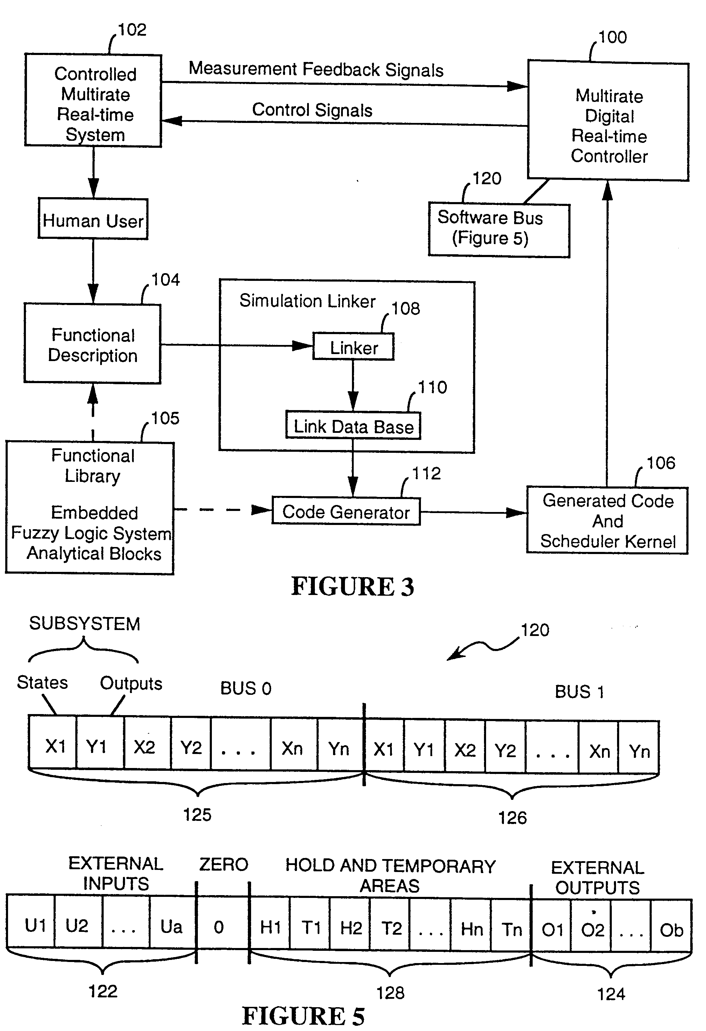

The basic system architecture of a control system in accordance with the present invention is shown in Figure 3. A digital real-time controller 100, which is typically a programmed digital computer such as an IBM PC having an Intel 80386 microprocessor, controls operation of a multirate real time system 102. System 102 is assumed herein to have multiple tasks running at distinct rates, and/or to have mechanisms requiring control signals to be updated at multiple distinct rates. For example, an automobile cruise control system may need to update control parameters from the automobile's throttle at a much higher rate than it needs to update the parameters which control the cruise-control system's operating mode.

As described more fully in U.S. Patent 4,796, 179, a human user models operation of the control system 100 using a graphical programming environment to generate a function description 104 of the control system's operation. The functional description 104, stored in the form of a catalog, is defined in terms of functional blocks selected from a library 105, and represents the computational relationships between the control system's input and output signals.

The library 105 includes at least one fuzzy logic functional block, as will be described in detail below, and may also have one or more expert system blocks. A description of a real time control system incorporating expert system blocks is contained in a related application, serial no. 07\553, 157, filed July 13, 1990, entitled Method For Operating A Real-Time Expert System In A Graphical Programming Environment, now U.S. Patent No. 5 133 045.

The functional description 104 is represented visually on a computer display by block icons representing selected functional blocks with interconnections representing signal paths between blocks. Each icon, once placed in a functional diagram, is assigned parameters by the human user concerning the block's functionality. These parameters and interconnections between the blocks can be edited, using a user-interface that is displayed on a computer display device, until a complete description of the control system has been generated.

An important parameter associated with every functional block in the specified control system is its trigger condition. Multirate systems include both periodic and non-periodic computations. For synchronously executed functional blocks, the trigger condition is a computation repetition rate, and a time skew value. The time skew value is a relative time value which specifies the starting time of a computation relative to a preselected time base. Thus, two computations may have the same computation rate, but two distinct time skews, indicating that one computation begins before the other by a certain amount of time.

From another point of view, the repetition rate and time skew value associated with functional block act as a guarantee that the results of the associated computation will be completed no later than a particular time - that is, before the next scheduled execution of that computation. Asynchronously executed functional blocks represent computations that are initiated by a specified asynchronous trigger condition, such as the receipt of a specified external input signal.

Once a description of the control system has been generated, the user can choose to simulate operation of the controller 100 (and optionally the controlled multirate real time system 102). Alternately, or after performing such simulations, the user also has the option of generating compilable real-time code 106 in a high-level computer language, representing the code required to carry out the control processes of the controller 100. The generated code can then be stored on disk for use on a controller, or directly downloaded onto the controller 100. In either rase, a linker 108 receives the description 104 of the control system, and stores this information in a link data base 110 for use either by a simulation interpreter or by the automatic code generator 112. An application specific scheduler kernel, which controls all timing, synchronization, and communication of input and output signals between computational subsystems via a software bus 120 (discussed below with reference to Figure 5), is also generated by the code generator 112.

## Superblocks and Subsystems

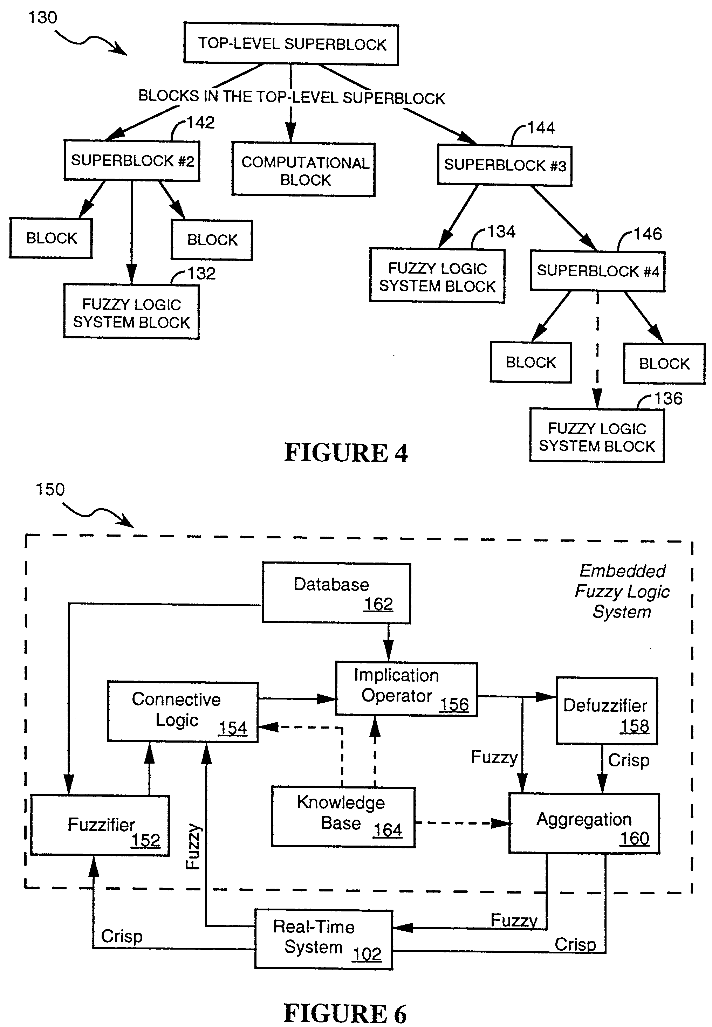

Referring to Figure 4, aggregates of functional blocks are called superblocks. Superblocks are used to organize a complex control system into manageable pieces. Since one superblock can contain other superblocks, a hierarchical functional description of the control system's computations can be generated, resulting in a tree structure such as the tree structure 130 shown in Figure 4. Each superblock is assigned a trigger condition, which is applicable to all the functional blocks in that superblock. In this example, the control system includes several fuzzy logic system blocks 132, 134, 136, each of which is included in one of the superblocks 142, 144, 146.

In the present invention, each set of computations to be performed at a different rate or skew, or in response to a different asynchronous trigger condition, is treated as a separate "subsystem". In other words, all of the computations for each distinct trigger condition (i.e., combination of rate and skew, or asynchronous trigger condition) are grouped together and called a "subsystem". Each subsystem is treated as a separate entity for the purposes of scheduling execution and inter-subsystem signal communication.

## Software Bus, Zero Order Hold, and Software Sample and Hold

Referring to Figure 5, a software bus 120 is used to interconnect the control software's subsystems. The software bus 120 is a buffer or data structure, stored in the controller's memory, through which all data transfers are passed. For instance, when transferring data output by Subsystem #2 to Subsystem #1, the data is copied from a portion of the software bus used to hold Subsystem #2's outputs to a portion of the bus used as an input buffer (or hold area) for Subsystem #1. Figure 5 shows a map of the software bus 120 used in the preferred embodiment. As shown, a portion 122 of the bus is allocated for "external inputs", which are external input signals, and another portion 124 is allocated to "external outputs". The main portion of the software bus is divided into separate areas for each subsystem, with two equal size areas called BUS0 125 and BUS1 126 for holding the outputs (Y) and states (X) of each subsystem. In other words, there is room for all the output signals and state signals of each subsystem both in BUS0 125 and in BUS1 126. Another portion 128 of the bus is used as a hold buffer for each of the subsystems.

A zero order hold is a software technique used to insure that the outputs from each subsystem are passed to other subsystems only after all the computations for a particular computation cycle are complete. In other words, the zero order hold ensures that all outputs from a subsystem are internally consistent and not in a state of flux. The zero order hold makes the outputs of each subsystem piecewise constant - all of the subsystem's outputs change simultaneously and change only at predefined times.

Technically, zero order holding is a computational process that holds the last computed output values as constants in memory until the computation for the next set of the same output values is completed.

In the present invention the zero order hold is implemented by providing two equal size bus portions (called BUS0 and BUS1) for storing the output signals and internal states of each subsystem. A flag for each subsystem, called BusFlag(subsystem#) keeps track of which bus portion is currently being used by each subsystem. For instance, if BusFlag(2)=0, then other subsystems which need to use the outputs generated by Subsystem #2 will obtain those outputs from the BUS0 portion 125 of the software bus. At the same time, new outputs generated by Subsystem #2 will be stored in BUS1. The bus flag for a subsystem is toggled just before the subsystem begins each computation cycle, thereby ensuring that outputs are always provided to other subsystems in accordance with a fixed schedule.

At the beginning of each subsystem's computation cycle all the inputs to that subsystem from other subsystems are "sampled and held° by copying them into a buffer, which in the present invention is simply a designated portion 128 of the software bus 120. This ensures that the input values for each subsystem do not fluctuate during the time it takes to perform the subsystem's computations.

Fuzzy logic System Model

The functional library 105 (see Figure 3), includes a functional block for implementing fuzzy logic control computations. Each instance of a fuzzy logic system block in a particular control system represents one instance or copy of this software, which is then tailored to the application by specifying the membership curves, rules, and computational methodologies to be used in that particular instance.

Referring to Figure 6, each fuzzy logic system block 150 embedded in the control system is implemented using five distinct software modules 152-160, a database of membership curves 162, and a knowledge base 164. The fuzzy logic block is modularized so as to clearly present all the programming choices available to the programmer, and also to clearly define the interfaces between the various stages of the fuzzy logic computations to be performed. The programmable aspects of the fuzzy logic block are the database 162 and the knowledge base 164.

- Database

The database 162 contains definitions of the inputs and outputs of the rule-based fuzzy logic system. This includes the data type (fuzzy or crisp), the universe of acceptable values, and the membership functions/curves or classes to be applied to real-valued data. In the preferred embodiment, membership curves are stored in the form of look-up tables, each of which is essentially a set of crisp/fuzzy data pairs, although the exact form in which the table is stored is not important. The use of look-up tables enables crips input values to be converted into fuzzy values simply by performing a table look-up to provide an approximate fuzzy value. Alternately, when converting input values falling between table look-up values, a linear, quadratic or other interpolation could be performed to obtain a more exact conversion value.

The fuzzy logic system contains no "true" states, meaning that all information concerning the input data will be applied at some point in the process of rule execution, and also meaning that all defined rules are always executed. One practical corollary is that the execution time of a defined fuzzy logic block remains virtually constant, regardless of the input data received, with the only possible variations being associated with the potentially variable amount of time required to perform numerical multiplication and division computations for different data values. Based on the block's execution time, the maximum computation repetition rate can be determined. The superblock in which the fuzzy logic block is embedded must not have a specified computation repetition rate which exceeds the computed maximum rate for the fuzzy logic block.

Fuzzy data describes the belief value with respect to some concept or factor (e.g., "speed is fast") which can be represented on a scale of zero to one (with zero meaning definitely false, one meaning definitely true and other values indicating belief values somewhere between true and false. This is exactly the type of information for which fuzzy logic systems are designed.

Crisp data describes a quantitative value (e.g., the actual speed expressed in some units). Crisp data is converted using specified membership functions (called class membership curves) into fuzzy values and vice versa. Membership functions are essentially look up tables used to convert between fuzzy and crisp values. Furthermore, each crisp data input can have several membership classes with corresponding membership functions used to formulate fuzzy values.

- Knowledge Base

The knowledge base 164 is the primary programmable component of the rule-based fuzzy logic system (the other programmable component being the database 162). Knowledge in this case is implemented in the form of IF-THEN rules, representing qualitative knowledge. For example, a common heuristic used in driving a car might be "if speed is fast then the required stopping distance is great." Note that both the condition and the assertion are made using crisp variable placed inside a fuzzy context to from fuzzy data. The above rule is perhaps hard to describe using a conventional equation, especially if the mechanics of braking are not well understood. However, the form of fuzzy logic does well to describe the way in which the human mind interprets the situation.

Rule-based fuzzy logic systems use parallel rules to solve problems of a qualitative nature. For instance, driving a car requires tens of inputs, all to be taken account of simultaneously, while only a few outputs are actually performed (e.g. accelerator pedal, brake pedal, steering wheel.) The use of parallel reasoning is implemented by using parallel rules, as will be described below.

The knowledge base 164 contains all the IF-THEN rules needed for interpreting input data. It also includes parameters which select (A) the connective logic to be used to combine the fuzzified outputs from parallel IF clauses within each rule, (B) an implication operator for applying a fuzzy output value to each output assertion curve, and (C) aggregation operators (one for each output crisp value) for weighting the outputs of parallel rules and combining the outputs of those parallel rules to generate crisp output values. Each of these will be explained in more detail with regard to the corresponding software modules.

## - Fuzzy and Crisp Inputs and Outputs

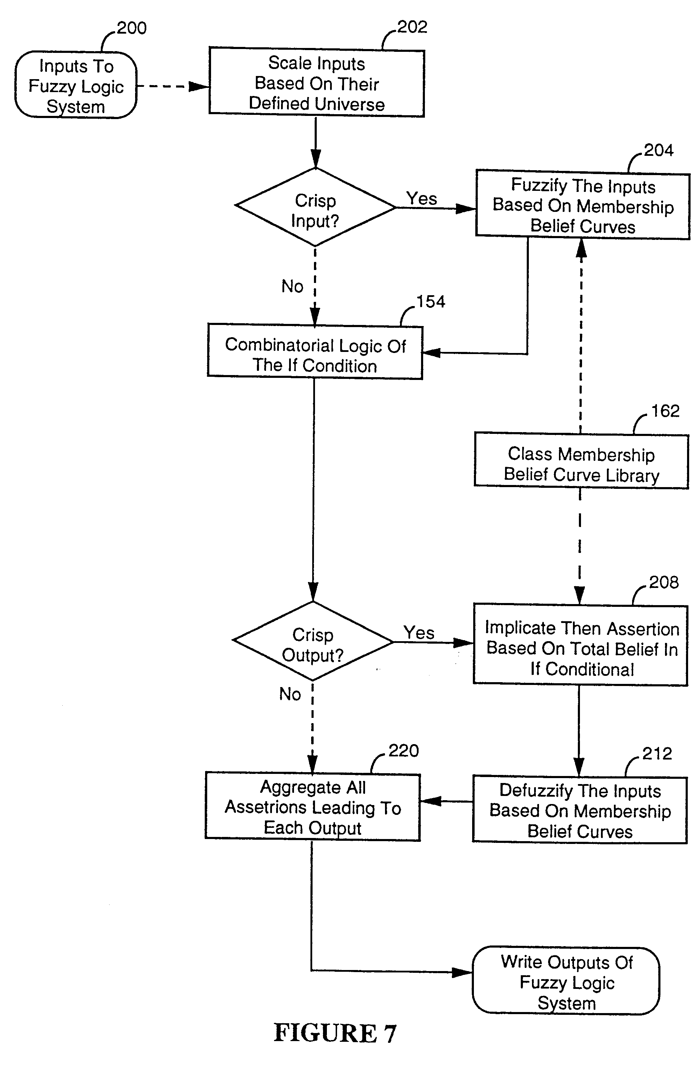

Referring to flow chart in Figure 7, inputs 200 to the fuzzy logic system are first scaled, if necessary (step 202). The fuzzy logic system can accept both crisp and fuzzy inputs and can output both crisp and fuzzy outputs. The reason that fuzzy inputs and outputs are allowed is so that computations performed by one fuzzy logic system block resulting in fuzzy logic values can be passed to other fuzzy logic system blocks.

## - Fuzzifier

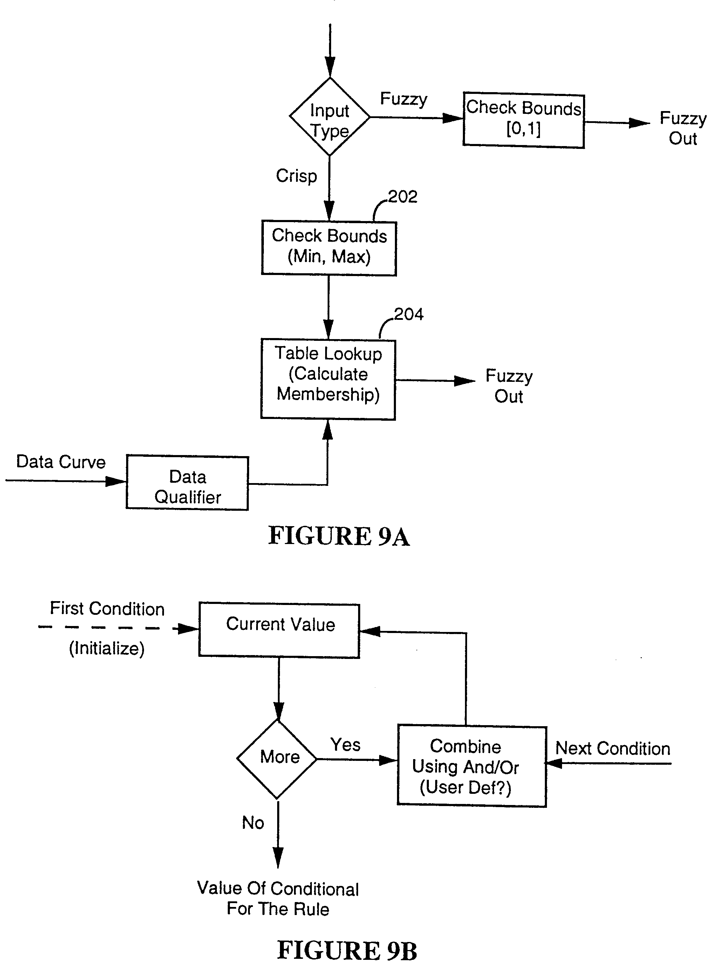

Referring to Figures 7, 8A and 9A, after any scaling of the input values, the fuzzifier module assigns a belief value to each real-valued input with respect to some concept or class (step 204). Several methods exist for the application of the member curve to a crisp, or real-valued, input. The most common method is to simply read the membership value on the curve corresponding to the input value, with the resulting value representing the fuzzy data.

## - Connective or Combinational logic

A typical, simple fuzzy logic rule will read something like: IF (A condition) .and. (B condition).and. (C condition) THEN (assertion). The use of conjunctions and disjunctions in the condition portion of a rule allows for multiple facts to be combined to form a conclusion (assertion). The manner in which the conjunction operator "and" and the disjunction operator "or" are defined can affect the operation of the fuzzy logic system. Typically, the conjunction (disjunction) operator is represented by the minimum (maximum) of the fuzzy condition values, though some implementations use the Boolean conjunction (disjunction) operator or other operators. In the present invention, the connective logic module 154 contains preprogrammed software routines for applying minimum, maximum and Boolean operators. In addition, the programmer may define additional conjunctive operator routines for the connective logic module 154. The system's programmer stores values in the knowledge base 164 (see Figure 6) which specifies the type of conjunctive logic to be used with each programmed fuzzy logic rule.

Referring to Figures 7, 8A and 9B, multiple fuzzy condition values from the fuzzification step are combined using the programmer selected conjunctive operator to generate an If Conditional Belief Value 206 for each set of related If conditions in a rule.

## - Implication Operator

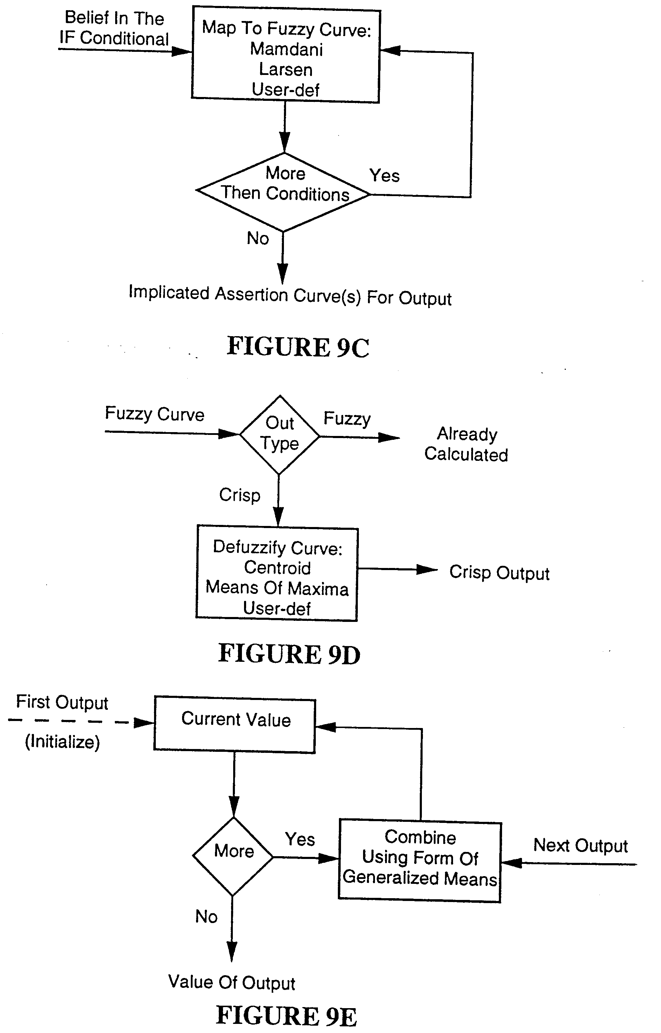

Referring to Figures 7, 8B and 9C, implication operators are used to allow an assertion to be formulated based on the computed If Conditional Belief Values. It should be noted that an assertion curve is a curve stored in the database 162 (see Figure 6) which represents the mapping of internal computed fuzzy If Conditional Belief Values into crisp output values. Assertion curves are modified for the purpose of each computation by applying a selected implication operator and the computed If Conditional Belief Values, as will be explained next.

The area of implication allows the greatest room for difference in fuzzy logic reasoning. The most common forms of fuzzy implication, using forward logic, are Mamdani's method and Larsen's method. User defined implication operator routines can be added to the implication operator module. In each case, the result of the implication procedure can be thought of as taking the conjunction of a conditional belief and the membership curve of the assertion. The Mamdani method uses the minimum operator to modify an assertion curve, while the Larsen method uses boolean conjunction. In either case, each point of the assertion curve (as represented by a look-up table in the fuzzy logic system's database) is combined with an If Conditional Belief Value using the selected implication operator (step 208). When a rule has two or more THEN conditions, such as rule having the form:

IF (A..., B..., C...) THEN (X) (Y)

where X and Y are separate THEN conditions, a first selected implication operator is applied to the assertion curve for X and a second selected implication operator (which may or may not be the same of the implication operator used for X) is applied to the assertion curve for Y.

As shown in Figure 1, when the Mamdani minimum operator is applied on a point by point basis to an assertion curve, the peak portion of the assertion curve is leveled off. When the Larsen method is used, the entire assertion curve is scaled by the If Conditional Belief Value (which is always a value between zero and one).

When fuzzy output values 210, rather than crisp output values 214 are desired, the implication procedure 208 passes on the If Conditional Belief Value unchanged.

## - Defuzzification

Referring to Figures 7, 8B and 9D, the step 212 of defuzzification is very similar to fuzzification with the exception that the possibility exists for multiple values to occur along the dependent variable, so a table look-up cannot always provide the answer. Several methods exist in obtaining a real-valued output from the modified assertion curve generated by the implication step 208. The methods for which routines have been preprogrammed into the defuzzification module are (A) first maximum, which corresponds roughly to a table lookup, (B) means of the maximum which takes the average of all maxima in the curve, and (C) centroid, which splits the area under the curve into two equal portions. Additional defuzzification computation routines can be added by users of the system. Each of these methods provides a crisp output value from the implicated fuzzy membership/assertion curve. If the example in Figure 1, the crisp output value is the centroid of the implicated assertion curve.

## - Aggregation

Referring to Figures 7, 8C and 9E, the process of aggregation 220 combines results from parallel rules to produce either fuzzy 222 or crisp 224 output values. In real world systems, many rules can be used to control a single output signal. This can be represent using a construct such as:

AGGREGATE{ IF (A...,B...,C...) THEN OUTPUT1
= (X) IF (D...,E...,F...) THEN OUTPUT1 = (Y) }

The idea of aggregation is to use a process, such as averaging to combine several values so as to generate one output value. This process falls into a family of operators known as "generalized means". In the preferred embodiment, the aggregation module includes preprogrammed routines, available for selection by the user, including arithmetic mean, geometric mean, harmonic mean, minimum, and maximum. As with all five of the fuzzy logic modules, additional aggregation computation routines can be added by users of the system.

Furthermore, each rule can be assigned a weight to allow expression of the importance of each rule with respect to the others. When the fuzzy logic system is programmed to output fuzzy values, the aggregation module aggregates fuzzy output values in accordance with the the weights assigned to each corresponding rule, and typically computes a weighted arithmetic mean.

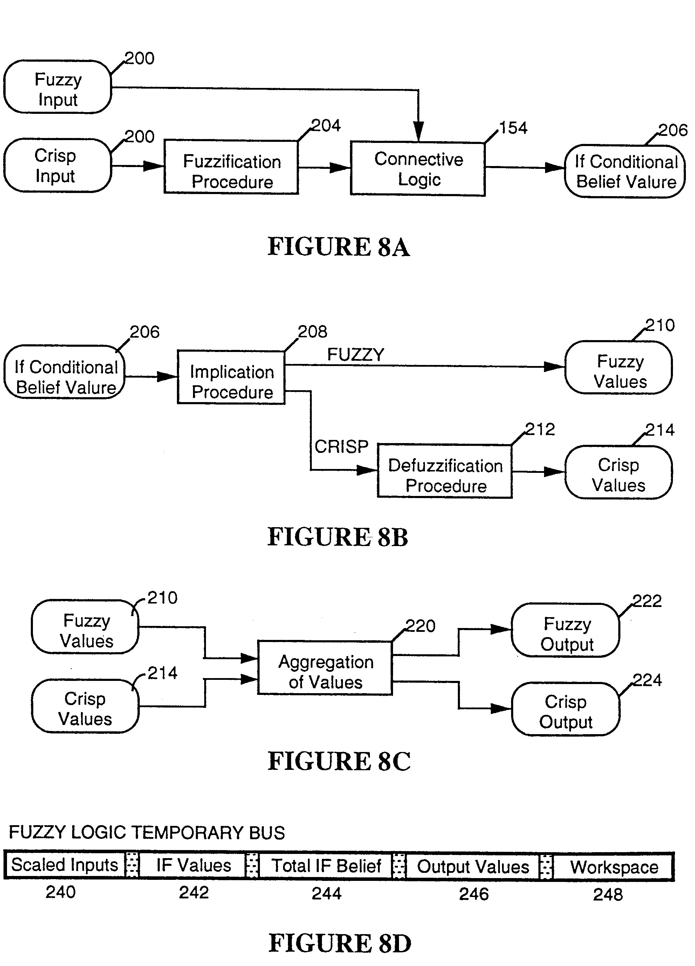

Figure 8D shows distinct areas of storage for the dynamic information utilized in the above steps. The scaled inputs region 240 contains the values of scaled input signals, If Values region 242 contains fuzzified input values, Total If Belief region 244 stores the outputs of the connective logic module, Output Values region 246 stores computed output values, and Workspace 248 is used to store temporary values such as implicated assertion curves.

The modularity of the fuzzy logic blocks used in the present invention allows users and programmers to freely mix and match various fuzzy logic computational techniques without having to write large amounts of code. In fact, the programmer needs only to specify the (A) the membership curves to be used, (B) the IF-THEN rules which govern processing of input signals, and (C) the particular computational technique to be used by each of the fuzzy logic modules, specified on a rule by rule basis. The computational techniques to be used for each specified fuzzy logic rule are stored in the knowledge base of the fuzzy logic block in the form of computational routine selection parameters, one selection parameter being used to select the technique to be used by each module for each rule.

## Extensions and Applications

When a specified control system is simulated, the computer system performing the simulation can be used to graphically display membership curves, including assertion curves after application of the implication step. Viewing these curves during simulation can be helpful to design engineers to determine how various membership curve shapes affect system performance, and to thereby select the best membership curves for a particular control application.

The interactive animation features of existing simulation products can also be used to view execution of the fuzzy logic subsystem(s) embedded in a contol system. For instance, the values of the IF conditions for each rule in the fuzzy logic subsystem could be monitored during application of a wide variety of input signal conditions.

In the above description of the fuzzy logic subsystem, the weights accorded to each rule during aggregation were described as fixed, programmed values. In alternate embodiments, various feedback signals to the fuzzy logic subsystem (e.g., from an expert system subsystem, neural network subsystem or other error correction subsystem) could be used to alter either the weights of the rules in the fuzzy logic subsystem or even to modify the membership functions. Such parameter feedback signal paths between other types of subsystems are allowed in Integrated System Inc.'s Matrix$_x$™ and System Build™ and AutoCode™ (trademarks of Integrated System Inc.) products.

While the present invention has been described with reference to a few specific embodiments, the description is illustrative of the invention and is not to be construed as limiting the invention. Various modifications may occur to those skilled in the art without departing from the true spirit and scope of the invention as defined by the appended claims.

## Claims

1. A method of operating a multirate real-time control system, comprising:

providing a computer having at least one central processing unit and memory for storing data and software;

storing, in said memory, system definition data representing said multirate real-time system as a set of interconnected functional blocks, including data specifying computations to be performed each time one of said functional blocks is executed, said system definition data also specifying external input signals and external output signals for said multirate real-time system;

defining subsets of said functional blocks as subsystems of the multirate real-time system;

at least one subset of said functional blocks comprising a fuzzy logic subsystem, said data specifying computations to be performed by said fuzzy logic subsystem including data representing a set of membership curves and a set of fuzzy logic rules for converting specified input signal values, using said membership curves, into a set of output signal values;

defining in said memory a double buffer interface for storing input and output signal values associated with said functional blocks, including defining: (A) an output signal buffer for holding output signal values generated by said functional blocks during execution thereof, and (B) a sample and hold buffer for each said subsystem;

scheduling and executing said specified computations associated with said defined subsystems; and

prior to executing said specified computations associated with each said defined subsystem, copying into said sample and hold buffer for each said defined subsystem all input signal values to be used by said specified computations, and holding said input signal values copied into said sample and hold buffer invariant during execution of said specified computations associated with each said defined subsystem;

whereby a consistent set of input signal values is presented to said fuzzy logic subsystem regardless of changing values of associated ones of said input signal values.

2. The method of claim 1,

wherein said output signal buffer comprises:

two equal size output buffers for each defined subsystem, each equal size output buffer holding output signal values and internal state variables of said defined subsystem; and

flag means, for each defined subsystem, having a value indicating which of said two equal size output buffers is used during each execution of said functional blocks in said subsystem;

said scheduling step including changing the value of said flag means associated with each defined subsystem prior to execution of said functional blocks in said defined subsystem, and copying into said sample and hold buffer specified output signals from the one of said two equal size output buffers of other defined subsystems not currently designated by said flag means.

3. The method of claim 1,

defining for each said subsystem a computation initiation condition comprising a computational trigger condition for asynchronous subsystems and a computational repetition rate and skew period for synchronous subsystems;

said fuzzy logic subsystem comprising a synchronous subsystem having an associated computational repetition rate and skew period;

said scheduling and executing step including:

defining said computational repetition rate and skew period for said fuzzy logic subsystem based on a specified output signal schedule of times at which output signals from said fuzzy logic subsystem are needed; and

scheduling initiation of execution of said specified computations associated with said fuzzy logic subsystem based on said defined output signal schedule.

4. The method of claim 1,

defining for each of a plurality of said subsystems a computational repetition rate and skew period based on a specified output signal schedule of times at which output signals from subsystems are needed; and

scheduling initiation of execution of said specified computations associated with said plurality of said subsystems based on said defined output signal schedule.

5. The method of claim 1, said fuzzy logic subsystem including a database for storing a multiplicity a membership curves, a fuzzifier module for converting crisp input signal values into fuzzy logic values, a connective logic module for combining said fuzzy logic values in accordance with defined rules to produce one or more output fuzzy values, an implication operator module for applying each said output fuzzy value to a corresponding one of said multiplicity of membership curves to produce an implicated assertion curve, a defuzzifier module for computing a crisp output value as a function of each said modified assertion curve, and an aggregation module for combining two or more crisp output values.

6. The method of claim 5, a plurality of said connective logic, implication operator, defuzzifier and aggregation modules each including a plurality of alternative computation routines, said fuzzy logic subsystem including means for specifying said defined rules and means for specifying which of said alternative computation routines are to be used in conjunction with each of said defined rules.

7. The method of claim 5, said membership curves storing step including storing look-up tables representing said membership curves, thereby enabling fast conversion of crisp input signals into fuzzy values by said fuzzifier module.

8. A method of simulating operation of a multirate real-time control system, comprising:

providing a computer having at least one central processing unit and memory for storing data and software;

storing, in said memory, system definition data representing said multirate real-time system as a set of interconnected functional blocks, including data specifying computations to be performed each time one of said functional blocks is executed, said system definition data also specifying external input signals and external output signals for said multirate real-time system; said specified computations simulating operation of corresponding portions of said multirate real-time control system;

defining subsets of said functional blocks as subsystems of the multirate real-time system;

at least one subset of said functional blocks comprising a fuzzy logic subsystem, said data specifying computations to be performed by said fuzzy logic subsystem including data representing a set of membership curves and a set of fuzzy logic rules for converting specified input signal values, using said membership curves, into a set of output signal values;

defining in said memory a double buffer interface for storing input and output signal values associated with said functional blocks, including defining: (A) an output signal buffer for holding output signal values generated by said functional blocks during execution thereof, and (B) a sample and hold buffer for each said subsystem;

scheduling and executing said specified computations associated with said defined subsystems; and

prior to executing said specified computations associated with each said defined subsystem, copying into said sample and hold buffer for each said defined subsystem all input signal values to be used by said specified computations, and holding said input signal values copied into said sample and hold buffer invariant during execution of said specified computations associated with each said defined subsystem;

whereby a consistent set of input signal values is presented to said fuzzy logic system regardless of changing values of associated ones of said input signals.

9. A multirate real-time control system, comprising:

a computer having at least one central processing unit and memory for storing data and software;

said memory including means for storing system definition data representing said multirate real-time control system as a set of interconnected functional blocks, including data specifying computations to be performed each time one of said functional blocks is executed, said system definition data also specifying external input signals and external output signals for said multirate real-time control system, and specifying subsets of said functional blocks as subsystems of the multirate real-time control system;

at least one subset of said functional blocks comprising a fuzzy logic subsystem, said system definition data specifying computations to be performed by said fuzzy logic subsystem including data representing a set of membership curves and a set of fuzzy logic rules for converting specified input signal values, using said membership curves, into a set of output signal values;

a double buffer interface for storing input and output signal values associated with said functional blocks, including (A) an output signal buffer for holding output signal values generated by said functional blocks during execution thereof, and (B) a sample and hold buffer for each said subsystem;

means for scheduling and executing said specified computations associated with said defined subsystems; and

buffer control means for copying into said sample and hold buffer for each said defined subsystem all input signal values to be used by said specified computations prior to executing said specified computations associated with each said defined subsystem, and for holding said input signal values copied into said sample and hold buffer invariant during execution of said specified computations associated with each said defined subsystem;

whereby a consistent set of input signal values is presented to said fuzzy logic subsystem regardless of changing values of associated ones of said input signal values.

**FIGURE 1**

PRIOR ART

**FIGURE 2**

10

**FIGURE 3**

**FIGURE 5**

130

```
TOP-LEVEL SUPERBLOCK
```

BLOCKS IN THE TOP-LEVEL SUPERBLOCK

142

```
SUPERBLOCK #2
```

```
COMPUTATIONAL
BLOCK
```

144

```
SUPERBLOCK #3
```

```
BLOCK
```

```
BLOCK
```

132

```
FUZZY LOGIC
SYSTEM BLOCK
```

134

```
FUZZY LOGIC
SYSTEM BLOCK
```

146

```
SUPERBLOCK #4
```

```
BLOCK
```

```
BLOCK
```

136

```
FUZZY LOGIC
SYSTEM BLOCK
```

## FIGURE 4

150

*Embedded Fuzzy Logic System*

```
Database
162
```

```
Connective
Logic      154
```

```
Implication
Operator   156
```

```
Defuzzifier
158
```

Fuzzy

Crisp

```
Fuzzifier
152
```

Fuzzy

```
Knowledge
Base      164
```

```
Aggregation
160
```

Crisp

```
Real-Time
System   102
```

Fuzzy

Crisp

## FIGURE 6

**FIGURE 7**

Inputs To Fuzzy Logic System — 200

Scale Inputs Based On Their Defined Universe — 202

Crisp Input? — Yes → Fuzzify The Inputs Based On Membership Belief Curves — 204

No ↓

Combinatorial Logic Of The If Condition — 154

Class Membership Belief Curve Library — 162

Crisp Output? — Yes → Implicate Then Assertion Based On Total Belief In If Conditional — 208

No ↓

Defuzzify The Inputs Based On Membership Belief Curves — 212

Aggregate All Assetrions Leading To Each Output — 220

Write Outputs Of Fuzzy Logic System

Fuzzy Input 200

Crisp Input 200 → Fuzzification Procedure 204 → Connective Logic 154 → If Conditional Belief Valure 206

## FIGURE 8A

If Conditional Belief Valure 206 → Implication Procedure 208

FUZZY → Fuzzy Values 210

CRISP → Defuzzification Procedure 212 → Crisp Values 214

## FIGURE 8B

Fuzzy Values 210

Crisp Values 214

→ Aggregation of Values 220 → Fuzzy Output 222

→ Crisp Output 224

## FIGURE 8C

FUZZY LOGIC TEMPORARY BUS

| Scaled Inputs | IF Values | Total IF Belief | Output Values | Workspace |
|---|---|---|---|---|
| 240 | 242 | 244 | 246 | 248 |

## FIGURE 8D

**FIGURE 9A**

**FIGURE 9B**

**Belief In The IF Conditional** → **Map To Fuzzy Curve:** Mamdani / Larsen / User-def

More Then Conditions — Yes →

No ↓

Implicated Assertion Curve(s) For Output

## FIGURE 9C

**Fuzzy Curve** → Out Type — Fuzzy → Already Calculated

Crisp ↓

Defuzzify Curve: Centroid / Means Of Maxima / User-def → Crisp Output

## FIGURE 9D

**First Output** (Initialize) → Current Value

More — Yes → Combine Using Form Of Generalized Means ← Next Output

No ↓

Value Of Output

## FIGURE 9E